(19) Europäisches Patentamt
European Patent Office
Office européen des brevets

(11) EP 1 129 118 B1

(12) **FASCICULE DE BREVET EUROPEEN**

(45) Date de publication et mention de la délivrance du brevet:
**21.11.2007 Bulletin 2007/47**

(21) Numéro de dépôt: **00956578.9**

(22) Date de dépôt: **31.07.2000**

(51) Int Cl.:
***C08F 222/10*** *(2006.01)* ***G02B 1/04*** *(2006.01)*

(86) Numéro de dépôt international:
**PCT/FR2000/002200**

(87) Numéro de publication internationale:
**WO 2001/009205 (08.02.2001 Gazette 2001/06)**

(54) **COMPOSITIONS POLYMERISABLES POUR LA FABRICATION DE SUBSTRATS POLYMERES TRANSPARENTS, SUBSTRATS POLYMERES TRANSPARENTS OBTENUS ET LEURS APPLICATIONS DANS L'OPTIQUE**

Polymerisierbare Zusammensetzungen für die Herstellung von transparenten Polymersubstraten, transparente Polymersubstrate die so hergestellt wurden und deren Verwendung in der Optik

POLYMERISABLE COMPOSITIONS FOR MAKING TRANSPARENT POLYMER SUBSTRATES, RESULTING POLYMER SUBSTRATES AND USES THEREOF IN OPTICS

(84) Etats contractants désignés:
**AT BE CH CY DE DK ES FI FR GB GR IE IT LI LU MC NL PT SE**

(30) Priorité: **02.08.1999 FR 9910031**

(43) Date de publication de la demande:
**05.09.2001 Bulletin 2001/36**

(73) Titulaire: **ESSILOR INTERNATIONAL COMPAGNIE GENERALE D'OPTIQUE**
**94227 Charenton cédex (FR)**

(72) Inventeurs:
- **RICHARD, Gilles**
  **F-77860 Quincy Voisins (FR)**
- **PRIMEL, Odile**
  **F-94300 Vincennes (FR)**
- **YEAN, Leanirith**
  **F-91160 Longjumeau (FR)**

(74) Mandataire: **Michelet, Alain et al**
**Cabinet Harlé et Phélip**
**7, rue de Madrid**
**75008 Paris (FR)**

(56) Documents cités:
**EP-A- 0 441 383** **EP-A- 0 453 149**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 129 118 B1

## Description

La présente invention se rapporte au domaine des compositions de monomères polymérisables qui, après polymérisation, fournissent des substrats polymères transparents et à leur utilisation pour la fabrication de lentilles optiques, en particulier ophtalmiques.
Les lentilles optiques à usage ophtalmique en matériau polymère organique sont connues et utilisées depuis de nombreuses années.
Un des matériaux les plus répandus est obtenu par polymérisation de compositions renfermant du diallyl carbonate de diéthylène glycol (ci-après désigné par CAD).
Ce monomère de base est disponible commercialement, par exemple, sous la marque CR39®.
Un exemple de lentille ophtalmique commercialisée dans un matériau de ce type est la lentille ORMA®.
Ce matériau présente intrinsèquement de bonnes propriétés mécaniques, en particulier de résistance aux chocs et de résistance à l'abrasion ainsi qu'une bonne résistance aux solvants organiques.
Ce matériau peut aussi être aisément coloré à la demande du client.
L'un des inconvénients liés à l'utilisation du CAD est le fait que la polymérisation de ce monomère s'effectue essentiellement par voie thermique, selon des cycles de chauffage particulièrement longs (plusieurs heures, voir plusieurs jours).
Il serait donc souhaitable de réduire la durée de ces cycles de polymérisation afin, entre autres, de pouvoir répondre dans les plus brefs délais à la demande des clients, de limiter l'immobilisation des moules servant à la production des lentilles et de réduire les coûts de fabrication.
Par ailleurs, bien que donnant généralement satisfaction, il est également souhaitable de fournir des matériaux présentant des propriétés intrinsèques améliorées par rapport aux matériaux issus du CAD.
Différents types de matériaux ont déjà été proposés dans l'art antérieur.
Le brevet US-A-4,138,538 décrit des compositions de monomères allyliques tels que le CAD, renfermant un monomère méthacrylique tel qu'un polyéthylène glycol di(méth)acrylate.
Ce monomère méthacrylique peut être utilisé à raison de 20 à 70% en poids du mélange polymérisable.
Le mélange est photopolymérisé, préférentiellement à basse température, puis un traitement thermique est effectué.
Le brevet US-A-4,650,845 décrit des compositions de monomères comprenant:

0 à 100 parties en poids d'un premier composant qui est un monomère uréthanne poly(méth)acrylate, et 100 à 0 parties en poids d'un second composant qui est une composition comprenant:

- A) de 30 à 60% en poids d'un monomère polyacrylate,
- B) de 20 à 70% en poids d'un modificateur du retrait lors de la polymérisation, et
- C) de 0 à 30% en poids d'un monomère diluant.

Les compositions sont préférentiellement photopolymérisées.
En pratique, les compositions décrites conduisent généralement à des polymères hautement réticulés du fait de la présence de monomères comportant de nombreux groupements fonctionnels.
Les compositions renferment généralement des monomères comportant au moins 4 groupements (méth) acrylates ; en outre, le brevet ne vise pas particulièrement des compositions renfermant des monomères à haut nombre d'Abbé.
Le brevet US-A-4,912,185 décrit des compositions de monomères polymérisables, pour la fabrication de lentilles ophtalmiques ou de vidéo disques, comprenant au moins un monomère acrylate ou méthacrylate de polyoxyalkylène glycol, au moins un agent de réticulation comportant plusieurs fonctions insaturées et au moins un monomère uréthanne possédant de 2 à 6 groupements terminaux méthacryliques.
En pratique, l'agent de réticulation cité ci-dessus comporte 3 à 4 groupements fonctionnels vinylique, acrylique ou méthacrylique.
De telles compositions sont préférentiellement durcies par polymérisation mixte UV/thermique.
Le brevet EP-A-453149 décrit des compositions renfermant un monomère di(méth)acrylate de polyoxyalkylèneglycol; un monomère contenant un motif bisphénol-A et conduisant, par homopolymérisation, à un polymère d'indice de réfraction supérieur à 1,55 et un monomère uréthanne ayant de 2 à 6 groupes terminaux (méth)acryliques.
La polymérisation est préférentiellement mixte UV/thermique.
Aucun de ces deux documents ne vise expressément l'incorporation de monomères à haut nombre d'Abbe et en particulier de monomères cycliques monofonctionnels à haut nombre d'Abbe.
Le brevet US-A-5,183,870 décrit des compositions comprenant de 10 à 60 % en poids d'un polybutylèneglycoldi (méth)acrylate, de 20 à 80% en poids d'un uréthanne poly(méth)acrylate, de 5 à 60 % en poids d'un monomère mono(méth)acrylate spécifique et de 0 à 60 % en poids d'un composé ayant au moins une double liaison polymérisable.

Selon le brevet US-A-5,183,870, le choix du polybutylène glycol di(méth)acrylate est essentiel pour aboutir à un bon compromis entre les propriétés de résistance aux chocs et une faible absorption d'eau.

L'exemple comparatif 7 décrit une composition renfermant un polyéthylène glycol di(méth)acrylate, un uréthanne diméthacrylate et un méthacrylate de tricyclo[5.2.1.0$^{2.6}$]décane-8-yl.

Le polymère issu de cette composition présente un taux d'absorption d'eau élevé de 3,6%.

Le brevet US-A-5,880,171 décrit des compositions photopolymérisables renfermant :

de 20 à 90%, et préférentiellement au moins 50% en poids d'un oligomère uréthanne, époxy ou polyester dont les terminaisons sont des (méth)acrylates et 5 à 80% en poids d'un diluant optionnel qui est un ester de diol hydrocarboné terminé par des groupements (méth)acrylate et/ou un tri, tétra ou poly(méth)acrylate.

Ce brevet n'envisage pas expressément l'utilisation de monomères monofonctionnels à haut nombre d'Abbe.

Le brevet US-A-5,566,027 décrit des compositions photopolymérisables comprenant de 25 à 45% d'un oligomère polyester uréthanne comportant une pluralité de groupements (méth)acryliques reliés à l'oligomère polyester via un groupement uréthanne et ayant un poids moléculaire d'au moins 700, de 31 à 70% en poids d'un (méth)acrylate polyfonctionnel ayant un poids moléculaire moyen de moins de 700, et de 5 à 55% en poids d'un (méth)acrylate monofonctionnel.

Cette composition est utilisée en vernis appliqué sur des lentilles ophtalmiques.

Il n'est pas envisagé de réaliser le corps de la lentille à partir d'une composition de ce type.

Comme on le voit donc, de nombreuses compositions polymérisables conduisant à des matériaux d'indice de réfraction de l'ordre de 1,5 ont été proposées dans l'art antérieur, sans toutefois donner totale satisfaction pour l'obtention de substrats polymères transparents, utilisables dans le domaine optique.

Un premier objet de la présente invention est donc de fournir de nouvelles compositions de monomères polymérisables conduisant à des substrats polymères transparents susceptibles d'être substitués à des polymères à base de CAD, c'est à dire possédant des propriétés globalement similaires à celles du CAD, et de préférence améliorées.

En particulier, les substrats optiques doivent posséder l'ensemble des caractéristiques suivantes :

- une transparence élevée (transmission généralement supérieure à 85%, et de préférence supérieure ou égale à 90%), avec une absence ou éventuellement une très faible diffusion de la lumière,
- une faible densité inférieure à 1,4, de préférence inférieure à 1,3 et mieux encore inférieure à 1,2.
- un indice de réfraction compris entre 1,48 et 1,52,
- un nombre d'Abbe élevé, supérieur ou égal à 40, de préférence supérieur ou égal à 45 et mieux encore supérieur ou égal à 50, afin d'éviter des aberrations chromatiques,
- une absence de couleur après polymérisation, en particulier un faible indice de jaune et une absence de jaunissement au cours du temps,
- une bonne résistance aux chocs (en particulier le verre non revêtu doit de préférence passer avec succès le test FDA de chute de billes),
- une bonne résistance à l'action des contraintes statiques,
- une bonne résistance à l'abrasion,
- une bonne aptitude aux traitements divers (dépôt de revêtements durs, anti-reflets, primaires anti-chocs,..), et en particulier une bonne aptitude à la coloration,
- une bonne aptitude aux traitements de surfaçage et de débordage, sans que la géométrie globale du verre soit altérée au cours de ces opérations,
- un faible taux d'absorption d'eau.

Un second objet de l'invention est de fournir des compositions qui puissent être aisément et rapidement polymérisées, en particulier qu'elles puissent être polymérisées par des techniques de photopolymérisation ou des techniques mixtes de photopolymérisation et de polymérisation thermique permettant de réduire les temps de cycle de fabrication des lentilles.

La composition de monomères polymérisables selon l'invention comprend:

- 35 à 70 parties en poids d'un ou plusieurs monomères (I) de formule:

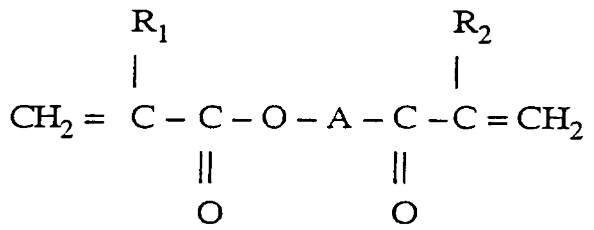

dans laquelle
$R_1$ et $R_2$ représentent H ou $CH_3$,
A représente un radical divalent de formule

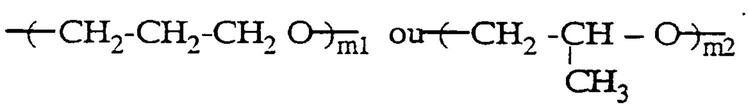
ou

m1 et m2 sont chacun un entier variant de 4 à 20,

- 5 à 50 parties en poids d'un monomère (II) comprenant au moins un motif uréthanne et au moins deux fonctions (méth)acrylate, et
- 5-40 parties en poids d'un monomère (III) à haut nombre d'Abbe et comprenant une ou plusieurs fonction(s) méthacrylate, le total des monomères (I), (II) et (III) représentant 100 parties en poids.

Le premier constituant important des compositions selon l'invention est le (ou les) monomère(s) (I) répondant à la formule ci-dessus.

Plus précisément, il s'agit d'esters (méth)acrylique de polypropylène glycol comportant un radical central A, linéaire ou ramifié, tel que défini ci-dessus.

Le monomère ou les monomères (I) du premier constituant sont des monomères de longueurs de chaîne relativement élevées, c'est-à-dire que le nombre d'unités polypropylèneglycol présentes dans le radical A doit être, égal ou supérieur à 4 et préférentiellement compris pour chacun des monomères (I) entre 4 et 20.

Lorsque plusieurs monomères (I) sont utilisés en mélange, on peut définir une valeur moyenne:

$$\overline{m} = \sum_{m=4}^{20} X_m . m$$

dans laquelle $X_m$ est le ratio en poids de monomère (I) pour lequel A comporte m motifs polypropylèneglycol dans sa chaîne par rapport au poids total des monomères de formule (I) du mélange.

Lorsque l'on utilise, comme premier constituant de l'invention, des produits commerciaux qui sont déjà des mélanges de monomère, on accède facilement à cette valeur $\overline{m}$ en effectuant une analyse par HPLC du mélange et en calculant le rapport

$$X_m = \frac{Sm}{S\ total}$$

où Sm représente la surface du pic correspondant au monomère (I) comportant m motif propylène glycol dans le radical divalent A, et S total représente la surface totale de tous les pics correspondant aux monomères (I) pour lesquels m varie de 4 à 20.

Selon l'invention, on utilise préférentiellement des mélanges de plusieurs monomères (I) pour lesquels la valeur moyenne m telle que définie ci-dessus varie entre 5 et 9, préférentiellement entre 6 et 7.

De préférence encore, les monomères (I) possèdent une structure ramifiée, c'est-à-dire que le radical divalent

A représente

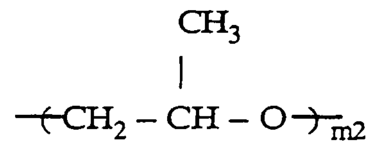

m2 ayant la signification indiquée précédemment.

Les compositions selon l'invention comprennent de 35 à 70 parties en poids de monomère (I), le poids total des monomères (I), (II) et (III) représentant 100 parties en poids.

De préférence, la composition comprend 40 à 60 parties en poids de monomère (I), dans la formule duquel m1 et m2 sont des entiers de 5 à 10.

Les monomères (I) sont disponibles commercialement auprès de la société Cray Valley sous la dénomination commerciale CD6440P auprès de la société SHIN NAKAMURA sous la dénomination commercial 9PG et auprès de la société UCB sous la dénomination commercial PPG 400.

Le CD6440P est un mélange de plusieurs monomères (I) dont le motif central est

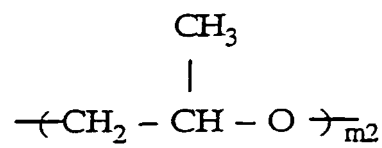

avec $m_2$ entier prenant les valeurs de 3 à 10 selon les ratios massiques suivants :

| | |
|---|---|
| $m_2 = 3$ | 2 % |
| $m_2 = 4$ | 8 % |
| $m_2 = 5$ | 14 % |
| $m_2 = 6$ | 20 % |
| $m_2 = 7$ | 27 % |
| $m_2 = 8$ | 19 % |
| $m_2 = 9$ | 9 % |
| $m_2 = 10$ | 1 % |

avec une valeur moyenne $\overline{m}_2 = 6{,}6$.

D'une manière générale le premier constituant apporte de la souplesse et de la flexibilité au réseau polymérique constituant le substrat final, tout en permettant d'obtenir un faible taux de reprise en eau.

Le second constituant des compositions selon l'invention est un monomère (II) comportant au moins un motif uréthanne et au moins deux fonctions méthacrylates.

On utilise préférentiellement deux familles de monomères (II) à motifs uréthannes.

La première famille est constituée par les oligomères uréthannes di(méth)acrylates, et préférentiellement, ceux qui sont des polyesters aliphatiques.

Des exemples de tels composés sont les oligomères uréthanne di(méth) acrylates de la société Cray Valley, en particulier le produit connu sous la dénomination commerciale CN964 ®.

La deuxième famille est composée par les monomères (II) ayant pour formule:

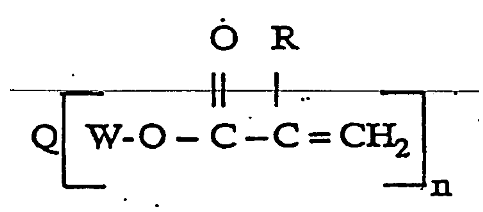

dans laquelle Q est un radical de valence n, à structure linéaire, ramifiée ou cyclique, renfermant aux moins deux motifs de formule

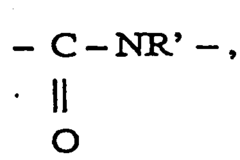

W est un radical alkylène divalent, de structure linéaire ou ramifiée, de 1 à 5 atomes de carbone.
n varie de 2 à 4,
R représente H ou $CH_3$, et
R' représente H ou un lien valentiel.

Préférentiellement, W représente le radical $-CH_2CH_2-$.

Préférentiellement, le radical Q est un radical divalent de formule :

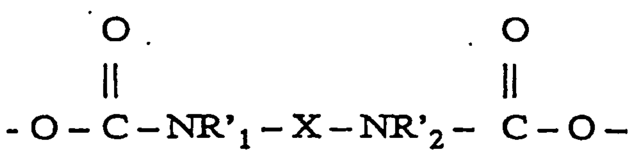

dans laquelle X représente une chaîne alkylène divalente linéaire ou ramifiée de 1 à 15 atomes de carbone, préférentiellement de 8 à 12 atomes de carbone.

$R'_1$ et $R'_2$ désignent indépendamment l'un de l'autre H ou $CH_3$.

Un monomère de ce type est disponible commercialement sous le nom commercial PLEX 6661-0 et a pour formule:

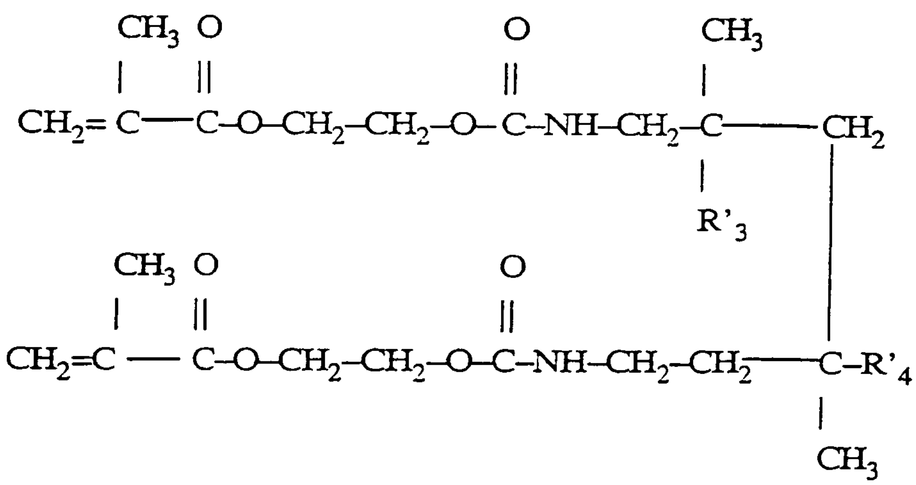

dans laquelle $R'_3$ et $R'_4$ désignent, indépendamment l'un de l'autre H ou $CH_3$.

Parmi la seconde famille de monomères (II), d'autres monomères préférés sont ceux dans la formule desquels Q désigne un radical trivalent de formule

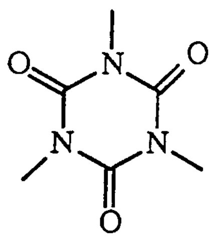

Des monomères de ce type disponibles commercialement ont pour formule

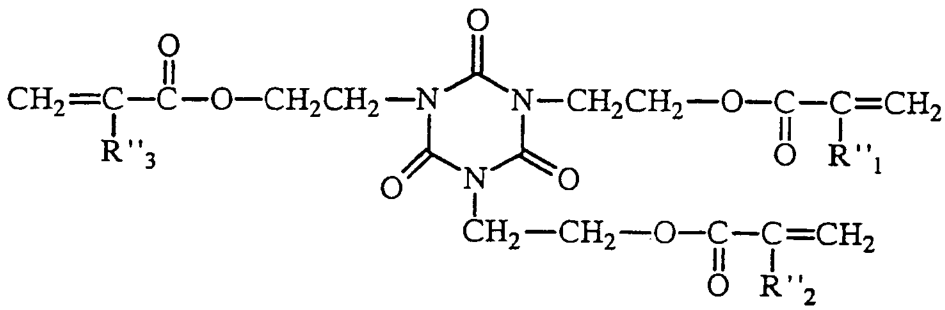

dans laquelle R"$_1$, R"$_2$ et R"$_3$ représentent, indépendamment les uns des autres H ou $CH_3$.

Le monomère de formule ci-dessus dans laquelle R"$_1$, R"$_2$ et R"$_3$ désignent chacun un groupement méthyle est disponible auprès de la société Cray valley sous la dénomination commerciale SR290.

Le monomère de formule ci-dessus dans laquelle R"1, R"$_2$, R"$_3$ désignent chacun un atome d'hydrogène est disponible auprès de la société Cray Valley sous la dénomination commerciale SR368.

D'une manière générale, on choisit préférentiellement les monomères de type (II) qui augmentent la température de transition vitreuse du polymère final.

Le monomère (II) est présent dans une proportion de 5 à 50 parties en poids, préférentiellement 30 à 50 et mieux encore 30 à 40 parties en poids par rapport au poids total des monomères (I), (II) et (III).

Comme monomères (II) disponibles dans le commerce on peut citer:

1.uréthannes diacrylates aliphatiques

- CN934, 964, 965, 963, 966, 967, 981 de la société CRAY VALLEY;
- Ebecryl 230, 244, 245, 270, 284, 285, 4830, 4835, 8800 de la société UCB.

2.uréthannes diacrylates aromatiques

- CN970, 972, 973 et976 (CRAY VALLEY)
- Ebecryl 210, 215 et 4244 (CTCB).

3. uréthannes acrylates de fonctionnalité > 2

- Triacrylates: CN920, 922, 923, 924 et 929 (CRAY VALLEY)
  Ebecryl 204, 205, 254, 264 et 265 (UCB)
- Tétraacrylates: CN925, 945, 923 et 995 (CRAY VALLEY)
  U4HA (SHINNAKAMURA)
- Hexaacrylates: CN975 (CRAY VALLEY)
  Ebecryl 220, 1290, 2220, 5129 (UCB)
  U6HA (SHINNAKAMURA)

4.uréthannes méthacrylates aliphatiques

- PLEX66610 (ROHM)
- U4H (Méthacrylate tétrafonctionnel de SHINNAKAMURA)

Le troisième constituant essentiel des compositions de monomères polymérisables selon l'invention est un monomère (III) à haut nombre d'Abbe et comprenant une ou plusieurs fonctions (méth)acrylate.

Par monomère à haut nombre d'Abbe, il faut comprendre un monomère susceptible d'engendrer, par homopolymérisation, un polymère transparent à haut nombre d'Abbe, c'est à dire d'au moins 50, et de préférence d'au moins 55.

De préférence, le monomère à haut nombre d'Abbe comprend au moins un radical cyclique ou polycyclique hydrocarboné non aromatique.

Le monomère (III) est choisi préférentiellement parmi l'un au moins des monomères de formule suivante :

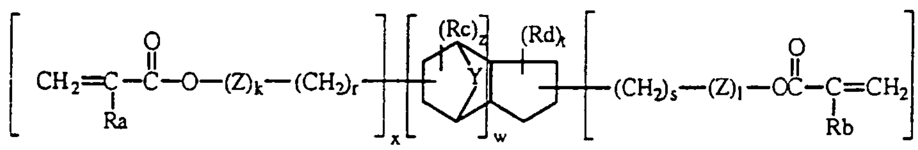
(A1)

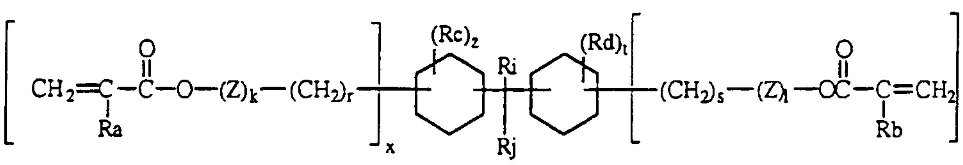
(B1)

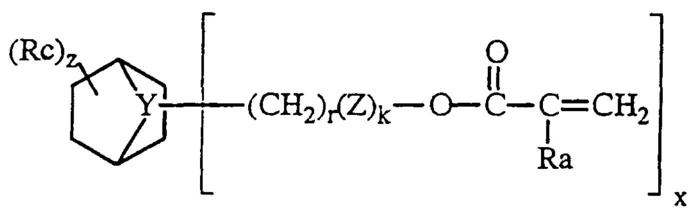
(C1)

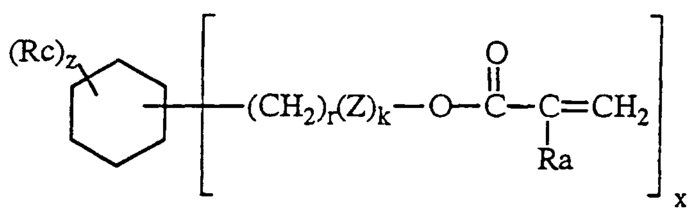
(D1)

Formules dans lesquelles :

Y est un radical divalent choisi parmi -O-, $-CH_2-$, $-C(CH_3)_2-$, $-C(H)(CH_3)-$,
Z est un radical divalent choisi parmi $-(CH_2)_p-O-$, p étant un entier de 1 à 4, et

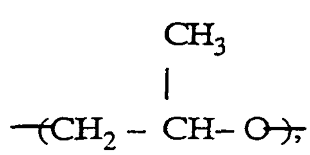

$R_a$, $R_b$ représentent H ou $CH_3$,
$R_c$, $R_d$ représentent, indépendamment l'un de l'autre, un radical alkyle linéaire ou ramifié de 1 à 6 atomes de carbone,

$R_i$, $R_j$ représentent, indépendamment l'un de l'autre, un radical alkyle linéaire ou ramifié de 1 à 10 atomes de carbone,
w est un entier de 1 à 3,
x est un entier de 0 à 3,
y est un entier de 0 à 3,
à la condition que $x + y \geq 1$,
k est un entier de 0 à 6,
1 est un entier de 0 à 6,
r est un entier de 0 à 6
s est un entier de 0 à 6,
z est un entier de 0 à 3, et
t est un entier de 0 à 3.

Les monomères (III) particulièrement préférés sont choisis parmi les monomères de formule

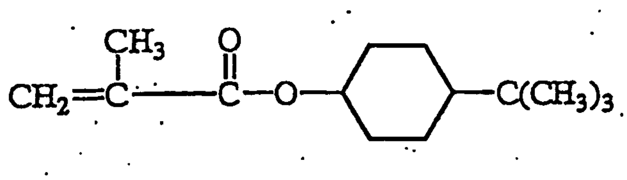

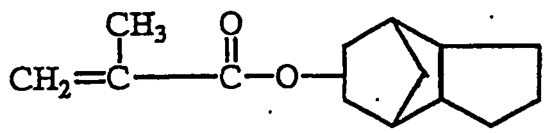

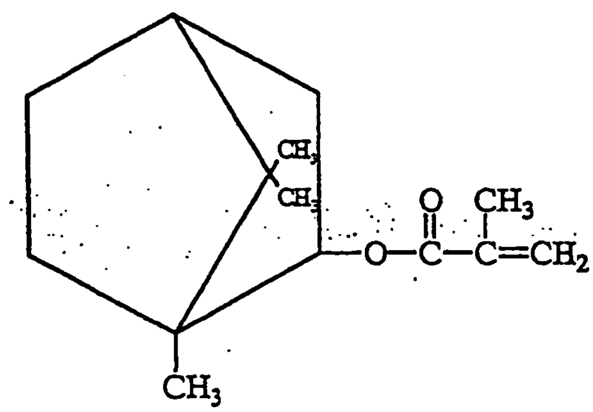

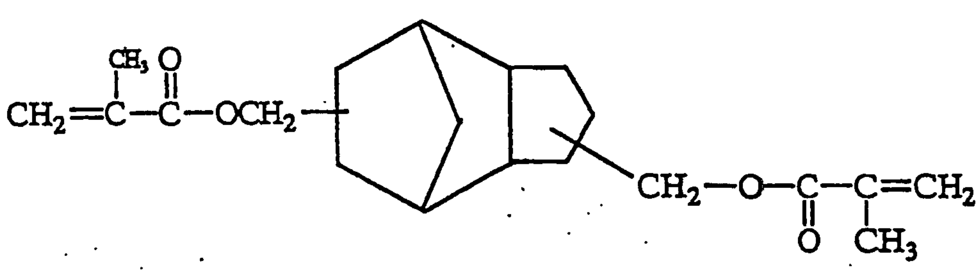

Le monomère (HT) est utilisé dans les compositions de l'invention dans un ratio de 5 à 40 parties en poids, préférentiellement 10 à 30 parties en poids par rapport au poids total des monomères (I), (II) et (III).

De préférence, les monomères (II) et (III) conduisent chacun, par homopolymérisation, à un homopolymère d'indice de réfraction inférieur ou égal à 1,54.

Les compositions de monomères selon l'invention peuvent comprendre- d'autres monomères (IV) polymérisables différents des monomères (I), (II) et (III), qui peuvent s'intégrer au réseau final obtenu, en particulier des monomères polymérisables par voie radicalaire.

Ces monomères permettent d'ajuster les propriétés des substrats transparents obtenus.

Ces monomères peuvent être présents dans les compositions de l'invention dans une proportion de 0 à 40% en poids, de préférence 0 à 20% par rapport au poids total des monomères (I), (II) et (III).

Parmi ces monomères (IV) on peut citer:

les alkyl (méth)acrylates tels que le méthyl (méth)acrylate et l' éthyl (méth)acrylate, les cycloalkyl (méth)acrylates tels que le cyclohexyl (méth)acrylate et le dicyclopentyl (méth)acrylate, le phényl (méth)acrylate, le benzyl (méth) acrylate, les naphtyl (méth)acrylates, les phénoxyalkyl (méth)acrylates tels que le phénoxyéthyl (méth)acrylate et le phénoxybutyl (méth)acrylate, les alkylèneglycol di(méth)acrylates tels que l'éthylèneglycol di(méth)acrylate et le propylèneglycol di(méth)acrylate, les polyalkylèneglycol di(méth)acrylates différents des monomères (I) tels que les polyéthylèneglycol di(méth)acrylates et les polybutylèneglycol di(méth)acrylates, le néopentylglycol di(méth) acrylate et les dérivés de bisphénol-A di(méth)acrylates.

Parmi les composés de bisphénol-A di(méth)acrylates, on peut citer les composés de formule :

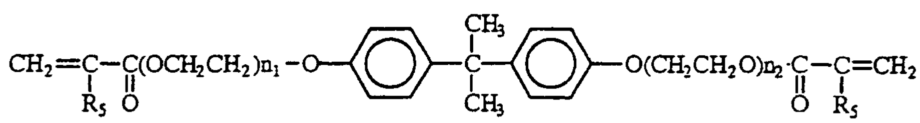

dans lesquelles $R_5$ représente H ou $CH_3$ et $n_1 + n_2$ a une valeur moyenne de 0 à 40.

Des composés préférés répondant à la formule ci-dessus sont ceux pour lesquels $R_5 = CH_3$ et $\overline{n_1 + n_2} = 2{,}6$ (EBADMA), $\overline{n_1 + n_2} = 4$ (DBADMA), $\overline{n_1 + n_2} = 10$ (OBADMA) et $\overline{n_1 + n_2} = 30$.

Le monomère (IV) peut être un monomère ou un mélange de monomères répondant à la fomule (I) et pour laquelle $m_1$ ou $m_2$ est un entier inférieur à 4. Cependant, de préférence, dans ce cas, la quantité de monomères (IV) est telle que la valeur moyenne :

$$\overline{m} = \sum_{m=1}^{20} X_m \cdot m$$

est au moins égale à 4 et de préférence au moins égale à 5.

Le monomère (IV) est de préférence tel que son homopolymère possède un indice de réfraction inférieur ou égal à 1,54.

En général, ces autres monomères (IV) représentent 0 à 40% en poids, de préférence 0 à 20%, mieux 0 à 10% en poids par rapport au poids total de monomères (I), (II) et (III), dans la composition.

Les compositions selon l'invention comprennent également un système d'amorçage de la polymérisation. Le système d'amorçage de polymérisation peut comporter un ou plusieurs agents d'amorçage de polymérisation thermique, ou photochimique ou encore un mélange d'agents d'amorçage de polymérisation thermique et photochimique. Ces agents d'amorçage sont bien connus dans la technique et on peut utiliser tout agent d'amorçage classique. Parmi les agents d'amorçage de polymérisation thermique utilisables dans la présente invention, on peut citer les péroxydes tels que le péroxyde de benzoyle, le péroxydicarbonate de cyclohexyle, et le péroxydicarbonate d'isopropyle.

Parmi les photoamorceurs, on peut citer en particulier l'oxyde de 2,4,6-triméthylbenzoyldiphénylphosphine, la 1-hydroxycyclohexylephénylcétone, la 2,2-diméthoxy 1,2-diphényléthane 1-one, et les alkyles benzoyl éthers.

En général, les agents d'amorçage sont utilisés en proportion de 0,01 à 5 % en poids par rapport au poids total des monomères polymérisables contenus dans la composition.

Les compositions polymérisables selon l'invention peuvent également comporter des additifs classiquement utilisés dans des compositions polymérisables pour le moulage d'article d'optique ou ophtalmiques, en particulier des verres de lunettes et des lentilles, dans des proportions classiques, à savoir des inhibiteurs, des colorants, des absorbeurs

UV, des parfums, des déodorants, des antioxydants, des agents anti-jaunissement et des composés photochromiques.

Les compositions monomères de l'invention ont en général une viscosité égale ou inférieure à 0,3 Pa.s, et de préférence inférieur à 0,2 Pa.s.

Les compositions selon l'invention peuvent être polymérisées par voie thermique, par voie photochimique ou par une combinaison de ces deux procédés.

L'invention concerne également un substrat polymère transparent possédant une indice de réfraction variant de 1,48 à 1,52 obtenu par polymérisation d'une composition selon l'invention, par exemple une lentille optique, notamment une lentille ophtalmique et en particulier un verre de lunette.

La présente invention va maintenant être décrite de façon plus détaillée dans les exemples qui suivent. Dans ces exemples, sauf indication contraire, tous les pourcentages et parties sont exprimés en poids.

**Exemples 1 à 17**

1) Préparation des compositions

On a préparé les compositions polymérisables du tableau I ci-après, selon le procédé suivant :

Les différents composants des compositions sont pesés dans une pièce à éclairage contrôlé, dans des flacons en verre fumé.

Le CD6440P, monomère (I), et les comonomères (II) et (III) ainsi qu'un photoamorceur et un absorbeur UV sont mélangés par agitation soutenue pendant quelques minutes. Un amorceur thermique stocké à basse température, est ajouté en dernière étape (pour des raisons de stabilité).

2) Processus de coulée

Les compositions préparées comme indiquées ci-dessus sont coulées dans des moules constitués de deux parties de moule en verre minéral préalablement nettoyées à la soudé, assemblées parallèlement par un ruban adhésif Barnier et distantes de 2 mm. La coulée s'opère de la manière suivante :

- Prélèvement de la composition à l'aide d'une seringue stérile (20ml)
- Désassemblage partiel du ruban adhésif pour créer une ouverture
- Insertion de l'embout de la seringue par l'ouverture
- Injection de la composition dans le moule
- Repositionnement du ruban adhésif pour fermeture étanche du moule.

3) Prépolymérisation photochimique

Les moules remplis sont placés dans un four de polymérisation photochimique constitué de deux lampes U.V. PRIMA" (lampes mercure) positionnées de part et d'autre à égale distance des moules et chaque moule reçoit de la part de chaque lampe un éclairement d'environ :

- 40 mW/cm2
- 125 mW/cm2

Des mesures infrarouge permettent de suivre la conversion des doubles liaisons (méth)acryliques en fonction du temps d'irradiation U.V.

4) Polymérisation thermique et recuit

Après polymérisation, le ruban adhésif est enlevé et l'assemblage mis en étuve à 100°C durant deux heures pour achever la polymérisation ; les verres sont ensuite démoulés puis contrôlés à la lampe à arc. Un ultime recuit permet de parfaire la polymérisation et de relaxer les contraintes résiduelles du substrat obtenu.

Les caractéristiques des substrats obtenus figurent dans le tableau II.

L'indice de Jaune Yi a été mesuré selon la norme ASTM D 1925.

Mesure de la colorabilité (% Tv red)

La mesure donnée est la valeur de la transmission mesurée dans le visible d'un verre de 2 mm d'épaisseur centre coloré par trempage dans un bain aqueux à 94°C dans lequel est dispersé un pigment rouge " disperse Red 13 " de la société Eastman Kodak.

La mesure de la Tg est effectuée par DMA (Analyse mécanique dynamique) sur une éprouvette de 5,2 cm x 1 cm x 2 mm (épaisseur) plane.

L'essai est effectué en flexion 3 points.

Tg correspond au maximum du rapport.

$$\frac{E'' \text{ (module de perte)}}{E' \text{ (module de conservation}}$$

TABLEAU 1

| Composition Constituants | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| (I) (parties en poids (pp) | CD6440P (52) | CD6440P (52) | CD6440P (52) | CD6440P (52) | CD6440P (45) | CD6440P (45) | CD6440P (54) | CD6440P (54) | CD6440P (54) | CD6440P (54) | CD6440P (48) | CD6440P (48) | CD6440P (48) | CD6440P (48) | CD6440P (60) | CD6440P (60) | CD6440P (64) |
| (II) (pp) | PLEX (33) | PLEX (33) | PLEX (33) | PLEX (33) | PLEX (37,5) | PLEX (45) | PLEX (36) | PLEX (36) | PLEX (36) | PLEX (36) | PLEX (32) | PLEX (32) | PLEX (32) | PLEX (32) | SR290 (10) | SR368 (10) | CN964 (10) |
| (III) (pp) | tBCHMa (15) | iBMa (15) | $M_3$CHMa (15) | SR423 (15) | iBMa (17,5) | DCP (10) | FA513A (10) | FA513M (10) | tBCHMa (10) | DCP (10) | FA513A (20) | FA513M (20) | tBCHMa (20) | DCP (20) | DCP (30) | DCP (30) | DCP (26) |
| Photo-amorceur (%) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) | CGI1850 (0,06) |
| Amorceur thermique (%) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) | tBPEH (0,1) |
| Absorbeur UV (%) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) | UV5411 (0,08) |

| | | |
|---|---|---|
| CD6440P | = | Polypropylèneglycol 400 diméthacrylate de la société CRAY VALLEY |
| PLEX® | = | PLEX 6661-0 (diméthacrylate de diuréthanne) de la société RÖHM |
| SR290® | = | isocyanurate de tri[éthyl méthacrylate] de la société CRAY VALLEY |
| SR368® | = | isocyanurate de tri[éthylacrylate] de la société CRAY VALLEY |
| FA513A | = | Tricyclodécanyl acrylate de la société FRANCRYL |
| FA513M | = | Tricyclodécanyl méthacrylate de la société FRANCRYL |
| tBCHMa | = | Tertiobutyl méthacrylate de la société RÖHM |
| DCP | = | Tricyclodécane diméthanol diméthacrylate |
| SR423® | = | Méthacrylate d'isobornyle de la société CRAY VALLEY |
| iBMa | = | Méthacrylate d'isobornyle (RÖHM) |
| tBPEH | = | tertiobutyl péroxy-2-éthylhexanoate |
| $M_3$CHMa | = | triméthylcyclohexyl méthacrylate |
| UV5411 | = | 2-(2'-hydroxy-5'-t-octylphényl)benzotriazole de la société American Cyanamid |
| CGI1850 | = | photoamorceur de la société CIBA GEIGY constitué d'un mélange (dans un ratio massique de 50/50) |

de 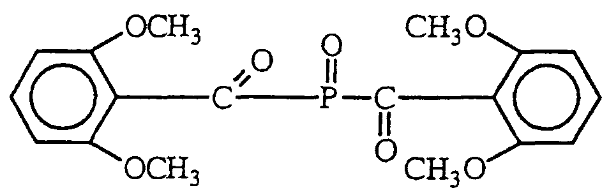

et de 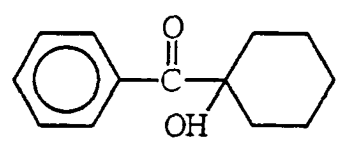

## TABLEAU 2

| Exemples | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| $n_c$ | 1,496 | 1,499 | 1,495 | 1,499 | 1,501 | 1,503 | 1,499 | 1,500 | 1,497 | 1,501 | 1,502 | 1,504 | 1.496 | 1,504 | 1,505 | 1,502 | 1,502 |
| $\nu_c$ | 56 | 56 | 57 | 56 | 55 | 54 | 56 | 57 | 55 | 55 | 55 | 56 | 56 | 55 | 55 | 55 | 55 |
| d | 1,12 | 1,13 | 1,12 | 1,13 | 1,13 | 1,15 | 1,14 | 1,14 | 1,13 | 1.15 | 1,14 | 1,135 | 1,11 | 1,15 | 1,14 | 1,14 | 1,13 |
| Yi (2 mm) | 1.6 | 1,8 | 1,7 | 2,1 | 1,1 | 1,9 | 1,2 | 1,4 | 1.5 | 1,2 | 1,0 | 1,5 | 1,5 | 1,2 | 1,5 | 1,4 | 1,4 |
| %Tv red | 51 | 50 | 54 | 53 | 55 | 50 | 36 | 40 | 38 | 38 | 40 | 50 | 52 | 46 | 45 | 46 | 43 |
| Tg (°C) | 96 | 96 | 96 | 100 | 108 | 100 | 82 | 88 | 90 | 93 | 82 | | | 93 | 100 | 100 | 88 |
| E'25°C (MPa) | 1730 | 2000 | 1950 | 1930 | 2200 | 2000 | 1780 | 1670 | 1700 | 1650 | 1720 | | | 1940 | 1500 | 1490 | 1540 |
| E'100°C (MPa) | 103 | 118 | 100 | 125 | 220 | 200 | 62 | 80 | 75 | 145 | 80 | | | 300 | 420 | 360 | 300 |

$n_e$ = indice de réfraction
$\nu_e$ = nombre d'Abbe
d = densité
Yi = indice de jaune

$$\left.\begin{matrix} E'25 \\ E'100 \end{matrix}\right\} =$$ modules élastiques à 25˚C et 100˚C respectivement

Les viscosités sont déterminées sur des échantillons de 250ml à 25˚C au moyen d'un viscosimètre BROOKFIELD modèle DV2 à des vitesses de cisaillement variant de 6 à 60 tours / minute (mobile No. 61 ou No. 62). On a utilisé le mobile No. 61 à une vitesse de cisaillement de 12 tours / minute.

Les indices de réfraction ($\lambda$ = 546 nm) et les nombres d'Abbe ont été déterminés à 25˚C au moyen d'un réfractomètre BELLINGHAM-STANLEY LIMITED ABBE 60/TR en utilisant différentes lampes (sodium, mercure et cadmium) comme sources lumineuses.

Les analyses DMA ont été effectuées avec un appareil Rhéometrics Solid Analyser RSA II sur des éprouvettes 52 x 10 x 2 mm, à fréquence 1 Hz et sur une gamme de température de -50˚C à 170˚C à 2˚C / minute.

## Essai de résistance aux chocs

On a effectué un essai de résistance aux chocs sur les lentilles ophtalmiques des exemples 2 et 5 présentant respectivement des épaisseurs au centre de 1,09 mm et 1,01 mm et de puissance -2 dioptries, par chute de billes d'énergie cinétique croissante au centre des lentilles jusqu'à rupture ou étoilement de la lentille et on détermine l'énergie moyenne de rupture.

Les résultats obtenus sont les suivants :

Lentille de l'exemple 2 : 3400 mJ ± 1800
Lentille de l'exemple 5 : 3800 mJ ± 1600.

On a également soumis 20 lentilles ophtalmiques selon l'exemple 1 d'épaisseur au centre de 1,01 mm ± 0,07 mm et de puissance' -2 dioptries à l'essai de résistance aux chocs précédent. L'énergie moyenne de rupture est de 3430 mJ ± 1250.

## Essai d'absorption d'eau

On a pesé un verre de l'exemple 1 et un verre de l'exemple 6, séchés en étuve, puis plongé les verres dans de l'eau à 90˚C pendant 30 minutes. On a retiré les verres, on les a essuyés et pesés à nouveau.

On a calculé le taux d'absorption d'eau :

$$T_{eau} = \frac{\text{Poids après traitement eau - Poids initial}}{\text{Poids initial}} \times 100$$

On a trouvé respectivement des valeurs de 0,58 et de 0,75% pour les verres des exemples 1 et 6.

## Revendications

1. Composition de monomères polymérisables comprenant :

   - 35 à 70 parties en poids d'un ou plusieurs monomères (I) de formule :

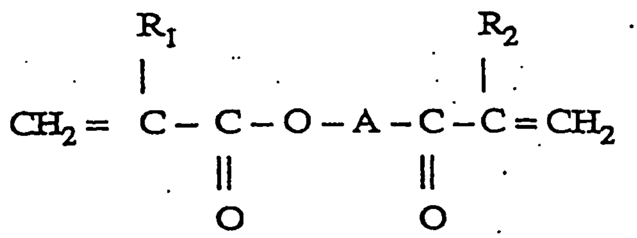

dans laquelle
$R_1$ et $R_2$ représentent H ou $CH_3$,
A représente un radical divalent de formule

$$\{CH_2\text{-}CH_2\text{-}CH_2\ O\}_{m2}$$

ou

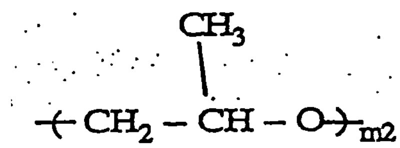

$m_1$ et $m_2$ sont chacun un entier variant de 4 à 20,
- 5 à 50 parties en poids d'un monomère (II) comprenant au moins un motif uréthanne et au moins deux fonctions (méth)acrylate.
- 5-40 parties en poids d'un monomère (III) à haut nombre d'Abbe (c'est-à-dire un monomère susceptible d'engendrer par homopolymérisation un polymère transparent ayant un nombre d'Abbe d'au moins 50) vet comprenant une ou plusieurs fonction(s) méthacrylate, le total des monomères (I), (II) et (III) représentant 100 parties en poids.

2. Composition selon la revendication 1 **caractérisée en ce que**, dans la formule du monomère (I), ledit motif divalent A représente :

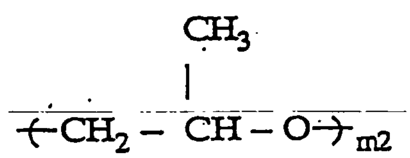

m2 est tel que défini dans la revendication 1.

3. Composition selon la revendication 1 ou 2 **caractérisée en ce qu'**elle comprend 40 à 60 parties en poids de monomères (I) et $m_1$ et $m_2$ sont des entiers de 5 à 10.

4. Composition selon l'une quelconque des revendications précédentes **caractérisée en ce que** le monomère (II) est un oligomère uréthanne di(méth)acrylate.

5. Composition selon la revendication 4, **caractérisée en ce que** ledit oligomère uréthanne di(méth)acrylate est un polyester aliphatique.

6. Composition selon l'une quelconque des revendications 1 à 3 **caractérisée en ce que** le monomère (II) a pour formule:

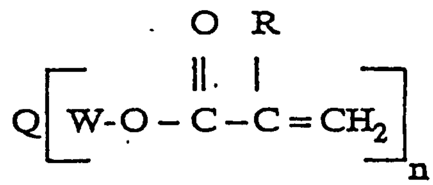

dans laquelle Q est un radical de valence n, à structure linéaire, ramifiée ou cyclique, renfermant au moins deux motifs de formule

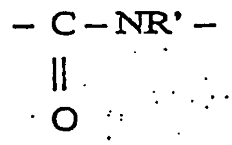

W est un radical alkylène divalent, de structure linéaire ou ramifiée, de 1 à 5 atomes de carbone.
n varie de 2 à 4,
R représente H ou $CH_3$, et
R' représente H ou un lien valentiel.

**7.** Composition selon la revendication 6, **caractérisée en ce que** W représente le radical $-CH_2CH_2-$.

**8.** Composition selon la revendication 6 ou 7 **caractérisée en ce que**, dans la formule du monomère (II), le radical Q est un radical divalent de formule :

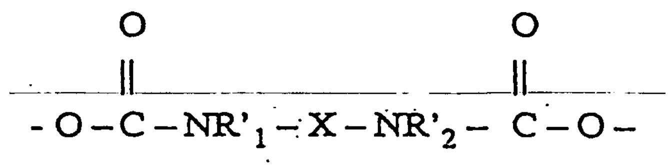

dans laquelle X représente une chaîne alkylène divalente linéaire ou ramifiée de 1 à 15 atomes de carbone, préférentiellement de 8 à 12 atomes de carbone.
$R'_1$ et $R'_2$ désignent indépendamment l'un de l'autre H ou $CH_3$.

**9.** Composition selon la revendication 8 **caractérisée en ce que** le monomère (II) a pour formule

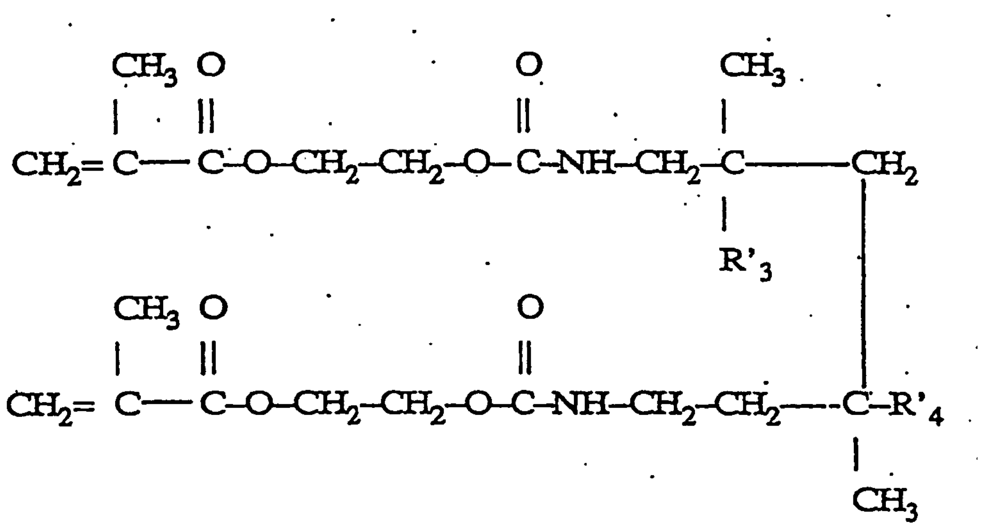

dans laquelle $R'_3$ et $R'_4$ désignent, indépendamment l'un de l'autre H ou $CH_3$.

10. Composition selon la revendication 6 ou 7 **caractérisée en ce que**, dans la formule du monomère (II), Q désigne un radical trivalent de formule :

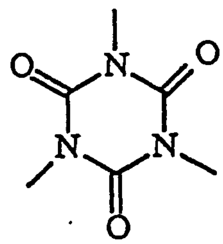

11. Composition selon la revendication 10 **caractérisée en ce que** le monomère (II) a pour formule:

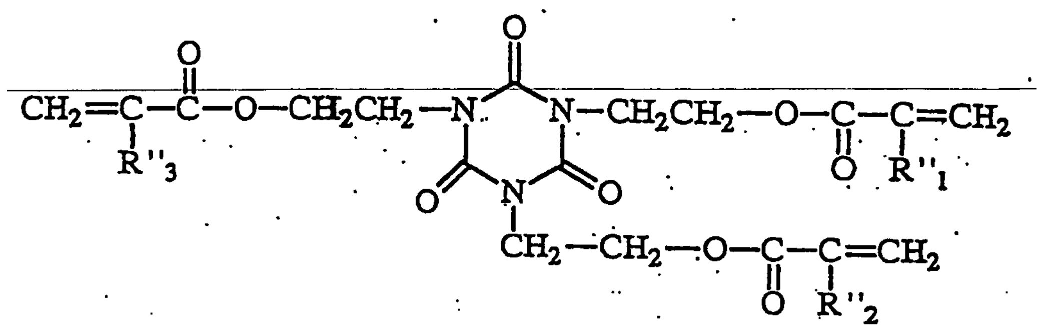

dans laquelle $R''_1$, $R''_2$ et $R''_3$ représentent, indépendamment les uns des autres H ou CH3.

12. Composition selon l'une quelconque des'revendications précédentes **caractérisée en ce qu'**elle comprend de 30 à 40 parties en poids de monomère (II).

13. Composition selon l'une quelconque des revendications précédentes, **caractérisée en ce que** le monomère (III) à haut nombre d'Abbe comprend au moins un radical cyclique ou polycyclique hydrocarboné non aromatique.

14. Composition selon la revendication 13, **caractérisée en ce que** le monomère (III) est choisi parmi l'un au moins des monomères de formule suivante :

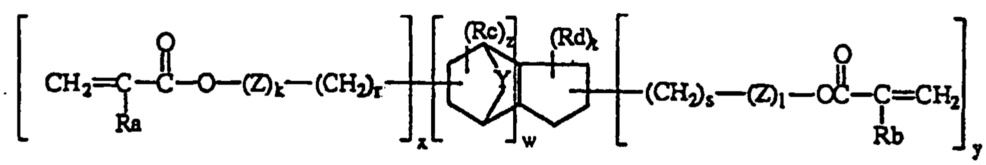

(A1)

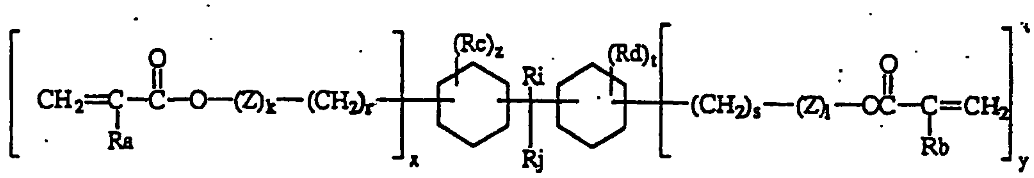

(B1)

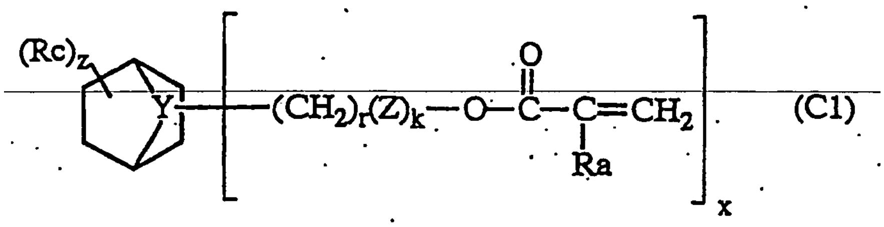

(C1)

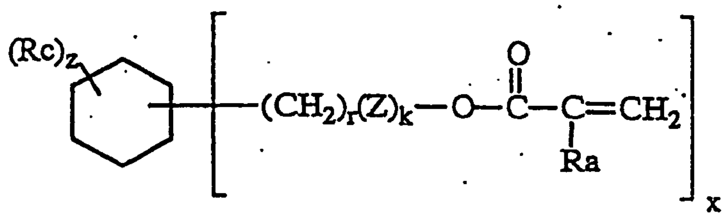

(D1)

Formules dans lesquelles:

Y est un radical divalent choisi parmi
$-O-$, $-CH_2-$, $-C(CH_3)_2-$, $-C(H)(CH_3)-$
Z est un radical divalent choisi parmi
$-(CH_2)_p-O-$, p étant un entier de 1 à 4, et

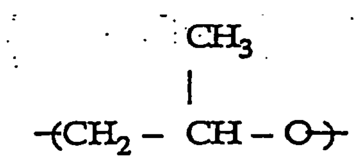

$R_a$, $R_b$ représentent H ou $CH_3$, $R_c$, $R_d$ représentent indépendamment l'un de l'autre un radical alkyle linéaire ou ramifié de 1 à 6 atomes de carbone
$R_i$, $R_j$ représentent indépendamment l'un de l'autre un radical alkyle linéaire ou ramifié de 1 à 10 atomes de carbone, w est un entier de 1 à 3, x est un entier de 0 à 3, y est un entier de 0 à 3 à la condition que $x + y \geq 1$, k est un entier de 0 à 6, 1 est un entier de 0 à 6, r est un entier de 0 à 6, s est un entier de 0 à 6, z est un entier de 0 à 3 et t est un entier de 0 à 3.

**15.** Composition selon la revendication 14 **caractérisée en ce que** le monomère (III) est choisi parmi les monomères de formule :

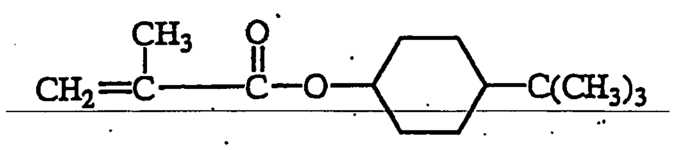

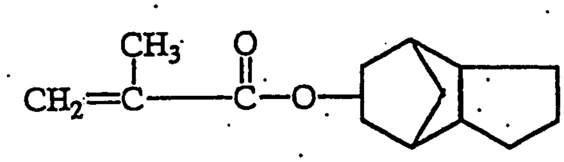

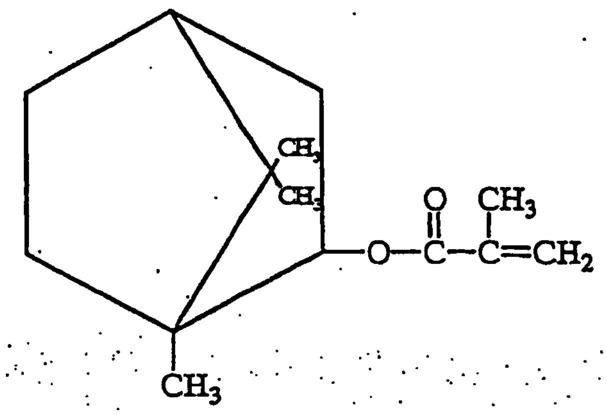

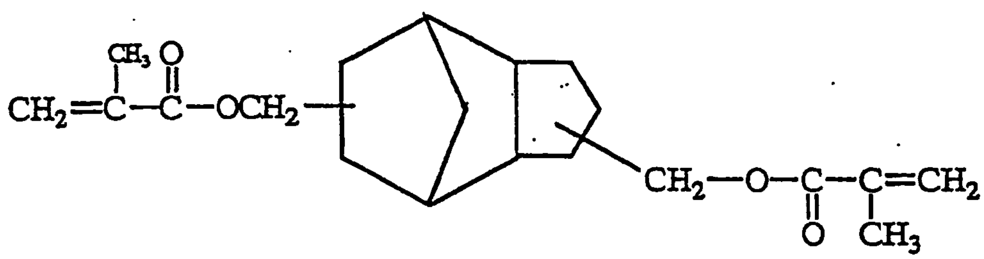

**16.** Composition selon l'une quelconque des revendications précédentes **caractérisée en ce qu'**elle renferme de 10 à 30 parties en poids de monomère (III).

**17.** Composition selon l'une quelconque des revendications précédentes **caractérisée en ce que** les monomères (II) et (III) conduisent chacun, par homopolymérisation à un homopolymère d'indice de réfraction inférieur ou égal à 1,54.

**18.** Composition selon l'une quelconque des revendications précédentes; **caractérisée en ce qu'**elle comprend un ou plusieurs monomères (IV) polymérisables par voie radicalaire, différents des monomères (I), (II) et (III), dans une proportion de 0 à 40% en poids par rapport au poids total des monomères (I), (II) et (III).

**19.** Composition selon l'une quelconque des revendications précédentes **caractérisée en ce que** le monomère (IV) est tel que son homopolymère possède un indice de réfraction inférieur ou égal à 1,54.

**20.** Composition selon l'une quelconque des revendications précédentes **caractérisée en ce qu'**elle possède une viscosité inférieure ou égale à 0,3 Pa.s.

**21.** Substrat polymère transparent possédant un indice de réfraction variant de 1,48 à 1,52 **caractérisée en ce qu'**il est obtenu par polymérisation d'une composition selon l'une quelconque des revendications précédentes.

**22.** Lentille optique comprenant un substrat polymère selon la revendication 21.

**23.** Lentille optique selon la revendication 22 **caractérisée en ce que** la lentille est une lentille ophtalmique.

**24.** Lentille optique selon la revendication 23 **caractérisée en ce que** la lentille est un verre de lunette.

**Claims**

**1.** A polymerizable monomer composition comprising :

- from 35 to 70 parts by weight of one or more monomers (I) of formula :

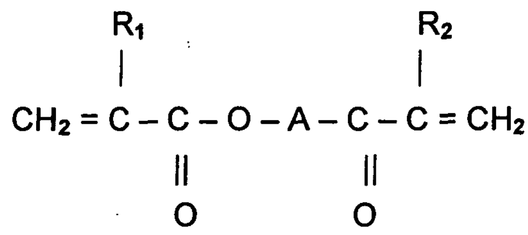

wherein
$R_1$ and $R_2$ represent H or $CH_3$,
A is a divalent moiety of formula :

$-(CH_2-CH_2-CH_2O)_{m1}-$ or 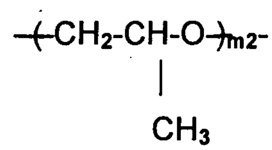

m1 and m2 each are an integer in the range of 4 to 20,

- from 5 to 50 parts by weight of a monomer (II) comprising at least a urethane unit and at least two (meth) acrylate functions, and
- from 5 to 40 parts by weight of a monomer (III) with a high Abbe number (i.e. a monomer liable to produce by homopolymerization a transparent polymer with an Abbe number of at least 50) and comprising one or more methacrylate functions, the total of the monomers (I), (II) and (III) representing 100 parts by weight.

2. A composition according to claim 1, **characterized in that**, in the monomer formula (I), said divalent unit A represents:

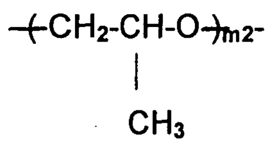

m2 being as defined in claim 1.

3. A composition according to claim 1 or 2 **characterized in that** it comprises from 40 to 60 parts by weight of monomers (I) and $m_1$ and $m_2$ are integers from 5 to 10.

4. A composition according to any one of the preceding claims, **characterized in that** the monomer (II) is a urethane di(meth)acrylate oligomer.

5. A composition according to claim 4, **characterized in that** said urethane di(meth)acrylate oligomer is an aliphatic polyester.

6. A composition according to any one of claims 1 to 3, **characterized in that** the monomer (II) has the following formula :

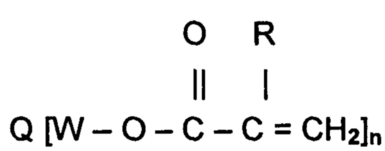

wherein Q is a moiety of a valence n, with a straight, branched or cyclic structure, comprising at least two units of formula :

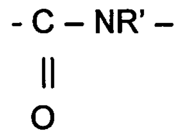

W is a divalent alkylene moiety, with a straight or branched structure, having from 1 to 5 carbon atoms,
n varies from 2 to 4,
R represents H or $CH_3$, and
R' represents H or a valence link.

**7.** A composition according to claim 6, **characterized in that** W represents the $-CH_2CH_2-$ moiety.

**8.** A composition according to claim 6 or 7, **characterized in that**, in the monomer formula (II), the Q moiety is a divalent moiety having the following formula :

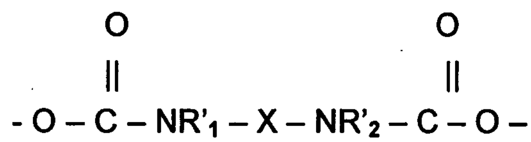

wherein X represents a straight or a branched divalent alkylene chain having from 1 to 15 carbon atoms, preferably from 8 to 12 carbon atoms, and
$R'_1$ and $R'_2$ independently from one another represent H or $CH_3$.

**9.** A composition according to claim 8, **characterized in that** the monomer (II) has the following formula :

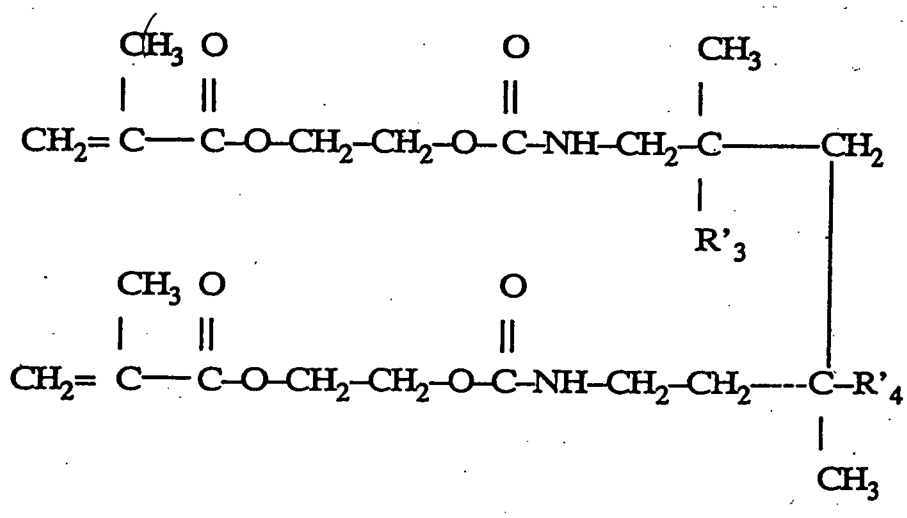

wherein $R'_3$ and $R'_4$ represent, independently from one another, H or $CH_3$.

**10.** A composition according to claim 6 or 7, **characterized in that**, in the monomer formula (II), Q represents a trivalent moiety of formula :

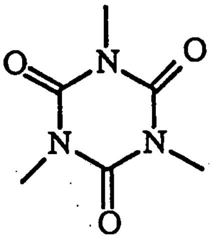

11. A composition according to claim 10, **characterized in that** the monomer (II) has the following formula:

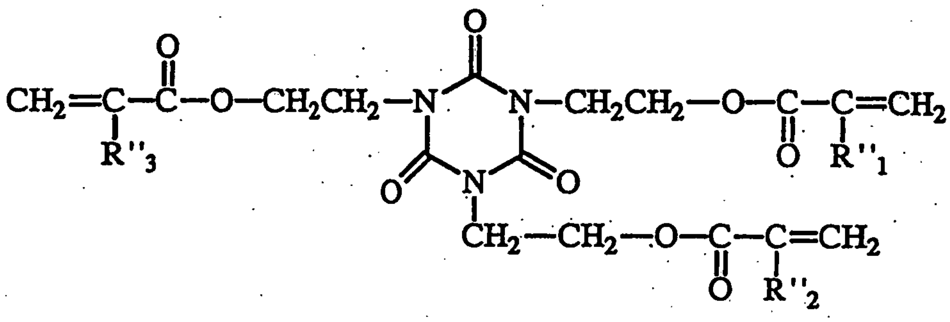

wherein R"$_1$, R"$_2$ and R"$_3$ represent, independently from each another, H or $CH_3$.

12. A composition according to any one of the preceding claims, **characterized in that** it comprises 30 to 40 parts by weight of monomer (II).

13. A composition according to any one of the preceding claims, **characterized in that** the monomer (III) with a high Abbe number comprises at least one non aromatic cyclic or polycyclic hydrocarbon moiety.

14. A composition according to claim 13, **characterized in that** the monomer (III) is selected amongst at least one of the monomers of the following formulae :

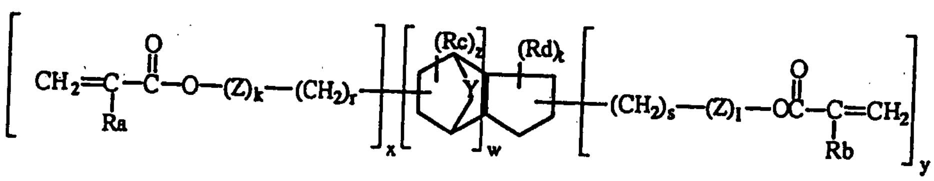

(A1)

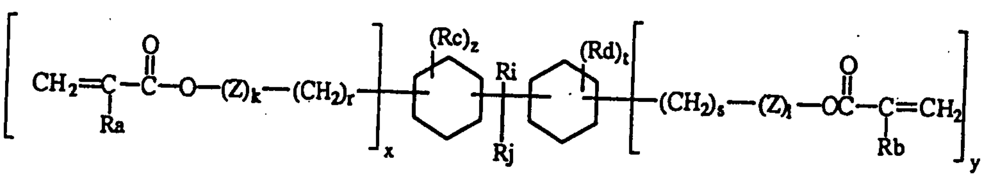

(B1)

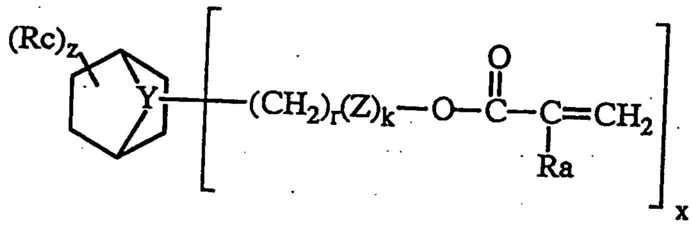

(C1)

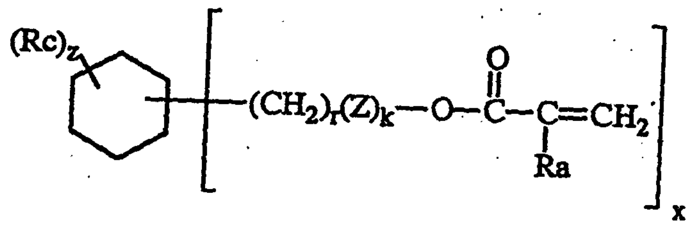

(D1)

wherein :

Y a divalent moiety selected amongst -O-, $-CH_2-$, $-C(CH_3)_2-$, $-C(H)(CH_3)-$, Z is a divalent moiety selected amongst $-(CH_2)p-O-$, p being an integer from 1 to 4 and

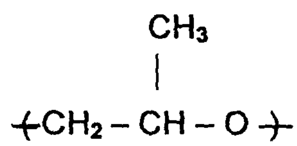

$R_a$, $R_b$ represent H or $CH_3$, $R_c$, $R_d$ represent, independently from one another, a straight or a branched alkyl moiety, having from 1 to 6 carbon atoms,
$R_i$, $R_j$ represent, independently from one another, a straight or a branched alkyl moiety, having from 1 to 10 carbon atoms,
w is an integer of 1 to 3, x is an integer of 0 to 3, y is an integer of 0 to 3, providing that x + y is equal to or higher than 1, k is an integer of 0 to 6, l is an integer of 0 to 6, r is an integer of 0 to 6, s is an integer of 0 to 6, z is an integer of 0 to 3 and t is an integer of 0 to 3.

**15.** A composition according to claim 14, **characterized in that** the monomer (III) is selected amongst the monomers of formulae :

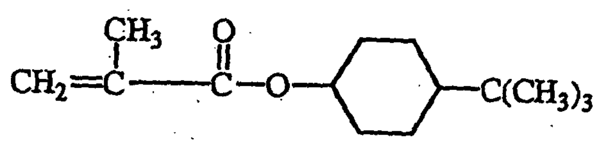

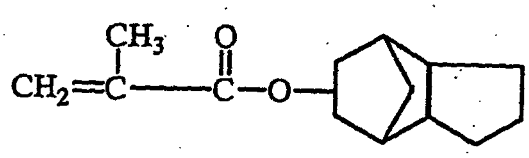

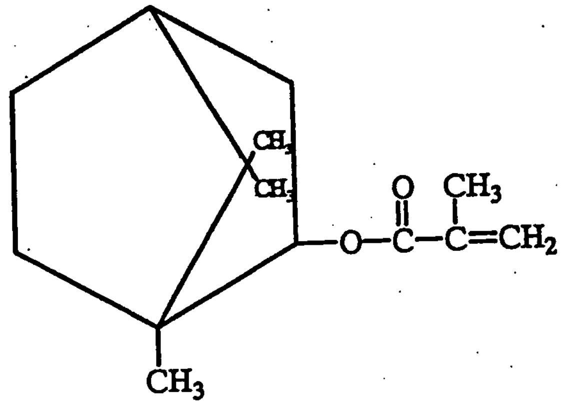

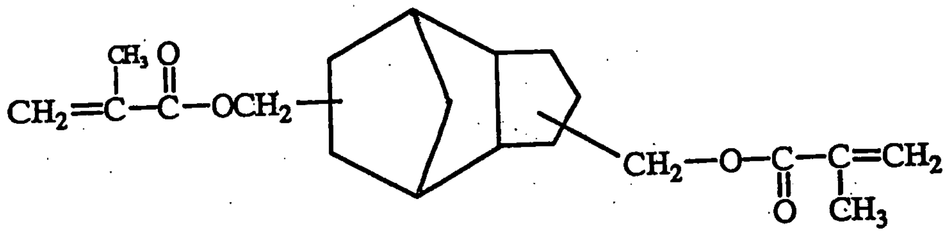

**16.** A composition according to any one of the preceding claims, **characterized in that** it comprises from 10 to 30 parts by weight of monomer (III).

**17.** A composition according to any one of the preceding claims, **characterized in that** the monomers (II) and (III) each provide, through homopolymerization, a homopolymer with a refraction index lower than or equal to 1.54.

**18.** A composition according to any one of the preceding claims, **characterized in that** it comprises one or more monomers (IV) polymerizable by radical mechanism and that are different from the monomers (I), (II) and (III), in a proportion of 0 to 40 % by weight based on the total weight of monomers (I), (II) and (III).

**19.** A composition according to any one of the preceding claims, **characterized in that** the monomer (IV) is such that its homopolymer has a refraction index lower than or equal to 1.54.

**20.** A composition according to any one of the preceding claims, **characterized in that** it has a viscosity lower than or equal to 0.3 Pa.s.

**21.** A transparent polymer substrate with a refraction index varying between 1.48 and 1.52, **characterized in that** it is obtained through polymerization of a composition according to any one of the preceding claims.

**22.** An optical lens comprising a polymer substrate according to claim 21.

**23.** An optical lens according to claim 22, **characterized in that** the lens is an ophthalmic lens.

**24.** An optical lens according to claim 23, **characterized in that** the lens is a glass.

**Patentansprüche**

**1.** Zusammensetzung aus polymerisierbaren Monomeren, umfassend:

- 35 bis 70 Gewichtsteile eines oder mehrerer Monomere (I) der Formel:

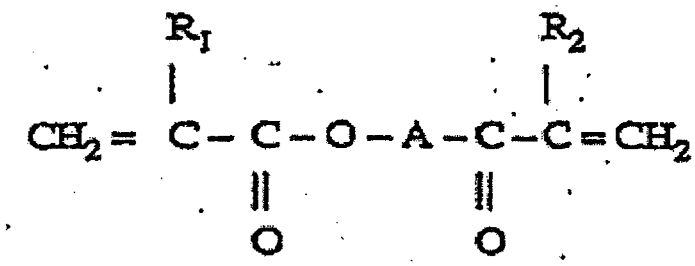

in der $R_1$ und $R_2$ H oder $CH_3$ darstellen,
A einen zweiwertigen Rest der Formel

$$\{CH_2\text{-}CH_2\text{-}CH_2\text{-}O\}_{m1}$$

oder

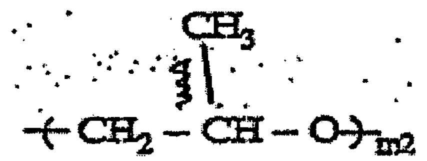

darstellt, wobei $m_1$ und $m_2$ jeweils eine ganze Zahl im Bereich von 4 bis 20 darstellen,
- 5 bis 50 Gewichtsteile eines Monomers (II), umfassend mindestens eine Urethaneinheit und mindestens zwei (Meth)acrylat-Funktionen,
- 5 - 40 Gewichtsteile eines Monomers (III) mit einer hohen Abbeschen Zahl (das heißt ein Monomer, das durch Homopolymerisierung ein transparentes Polymer mit einer Abbeschen Zahl von mindestens 50 hervorbringen kann) und enthaltend eine oder mehrere Methacrylat-Funktion(en), wobei die Monomere (I), (II) und (III) zusammen 100 Gewichtsteile darstellen.

**2.** Zusammensetzung nach Anspruch 1, **dadurch gekennzeichnet, dass** in der Formel von Monomer (I) die genannte zweiwertige Einheit A:

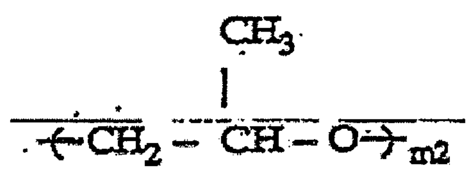

darstellt, wobei $m_2$ so wie in Anspruch 1 definiert ist.

**3.** Zusammensetzung nach Anspruch 1 oder 2, **dadurch gekennzeichnet, dass** sie 40 bis 60 Gewichtsteile Monomer (I) umfasst und $m_1$ und $m_2$ ganze Zahlen von 5 bis 10 sind.

**4.** Zusammensetzung nach einem der vorhergehenden Ansprüche, **dadurch gekennzeichnet, dass** das Monomer (II) ein Urethan-Di(meth)acrylat-Oligomer ist.

**5.** Zusammensetzung nach Anspruch 4, **dadurch gekennzeichnet, dass** dieses Urethan-Di(meth)acrylat ein aliphatischer Polyester ist.

**6.** Zusammensetzung nach einem der Ansprüche 1 bis 3, **dadurch gekennzeichnet, dass** das Monomer (II) die Formel:

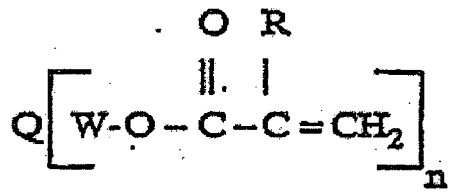

aufweist, in der Q ein Rest der Wertigkeit n ist, mit linearer, verzweigter oder cyclischer Form, umfassend mindestens zwei Einheiten der Formel

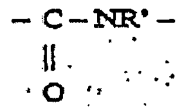

W ein zweiwertiger Alkylenrest ist, mit linearer oder verzweigter Struktur und 1 bis 5 Kohlenstoffatomen,
n von 2 bis 4 variiert,
R H oder $CH_3$ darstellt, und
R' H oder eine Valenzbindung darstellt.

**7.** Zusammensetzung nach Anspruch 6, **dadurch gekennzeichnet, dass** W den Rest $-CH_2-CH_2-$ darstellt.

**8.** Zusammensetzung nach Anspruch 6 oder 7, **dadurch gekennzeichnet, dass** in der Formel von Monomer (II) der Rest Q ein zweiwertiger Rest der Formel:

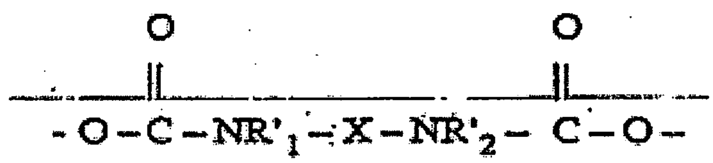

ist, in der X eine zweiwertige lineare oder verzweigte Alkylenkette mit 1 bis 15 Kohlenstoffatomen darstellt, vorzugsweise mit 8 bis 12 Kohlenstoffatomen,
$R'_1$ und $R'_2$ unabhängig voneinander H oder $CH_3$ bezeichnen.

**9.** Zusammensetzung nach Anspruch 8, **dadurch gekennzeichnet, dass** das Monomer (II) die Formel

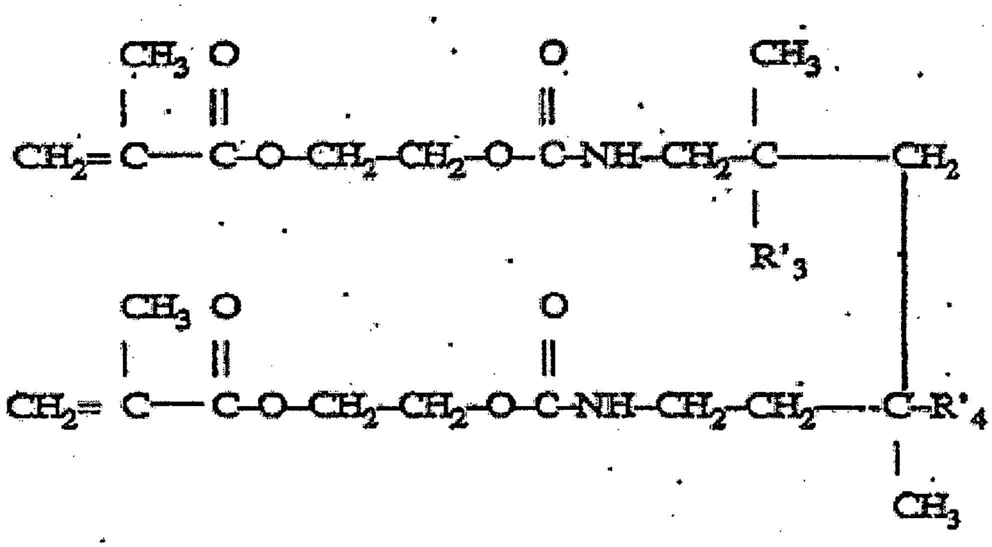

hat, in welcher $R'_3$ und $R'_4$ unabhängig voneinander H oder $CH_3$ bezeichnen.

**10.** Zusammensetzung nach Anspruch 6 oder 7, **dadurch gekennzeichnet, dass** in der Formel von Monomer (II) der Rest Q einen dreiwertigen Rest der Formel:

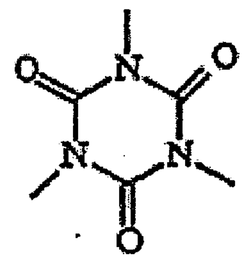

darstellt.

**11.** Zusammensetzung nach Anspruch 10, **dadurch gekennzeichnet, dass** das Monomer (II) die Formel

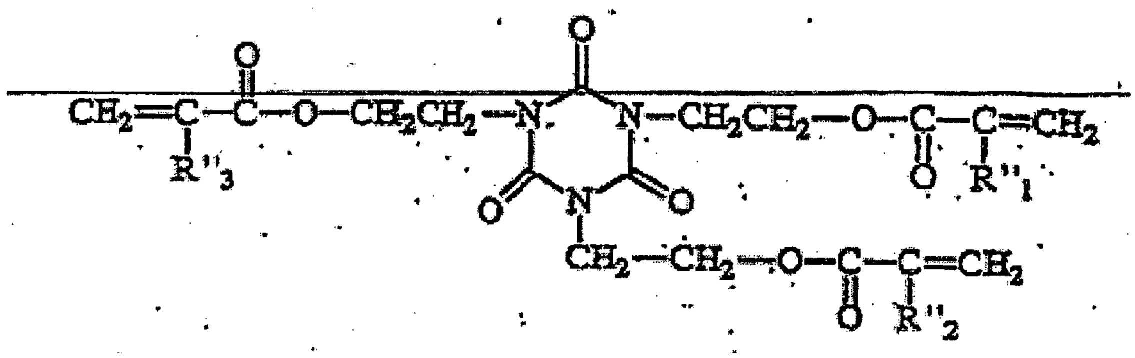

hat, in der $R''_1$, $R''_2$ und $R''_3$ unabhängig voneinander H oder $CH_3$ darstellen.

**12.** Zusammensetzung nach einem der vorhergehenden Ansprüche, **dadurch gekennzeichnet, dass** sie 30 bis 40 Gewichtsteile von Monomer (II) enthält.

**13.** Zusammensetzung nach einem der vorhergehenden Ansprüche, **dadurch gekennzeichnet, dass** das Monomer (III) mit hoher Abbeschen Zahl mindestens einen cyclischen oder polycyclischen Rest eines nichtaromatischen Kohlenwasserstoffs umfasst.

**14.** Zusammensetzung nach Anspruch 13, **dadurch gekennzeichnet, dass** das Monomer (III) ausgewählt wird aus mindestens einem der Monomere der folgenden Formel:

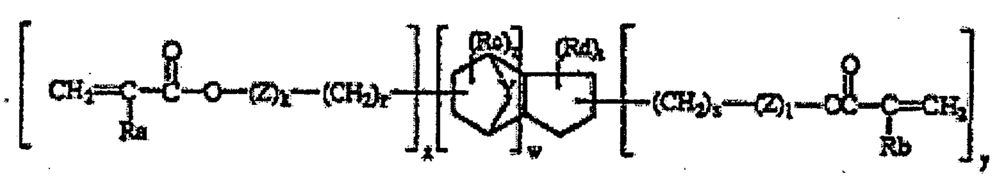 (A1)

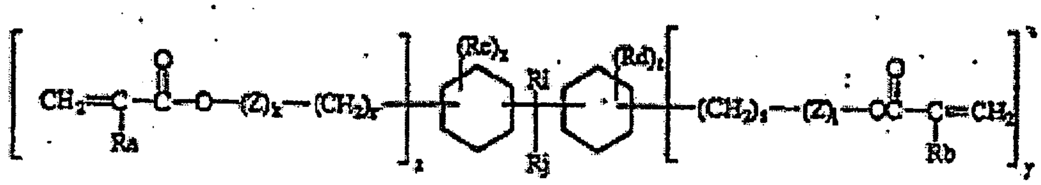

(B1)

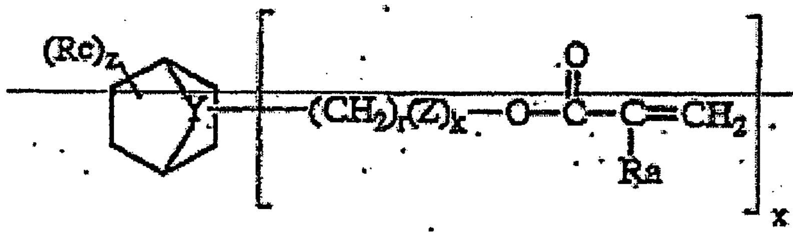

(C1)

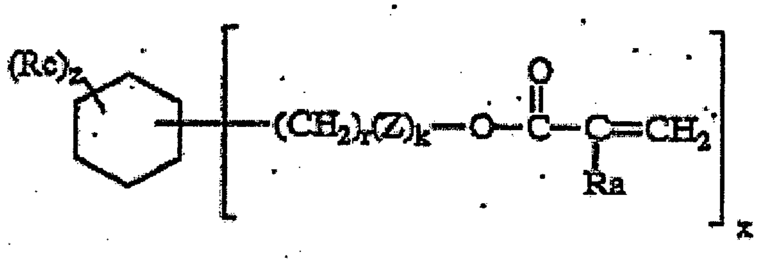

(D1)

Formeln, in denen:

Y ein zweiwertiger Rest ist, ausgewählt aus
-O-, $-CH_2-$, $-C(CH_3)_2-$, $-C(H)(CH_3)-$
Z ein zweiwertiger Rest ist, ausgewählt aus
$-(CH_2)_p-O-$, wobei P eine ganze Zahl von 1 bis 4 darstellt, und

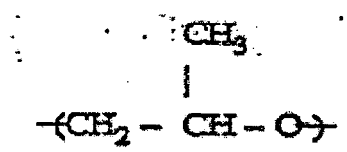

$R_a$, $R_b$ H oder $CH_3$ darstellen, $R_c$, $R_d$ unabhängig voneinander einen linearen oder verzweigten Alkylrest mit 1 bis 6 Kohlenstoffatomen darstellen
$R_i$, $R_j$ unabhängig voneinander einen linearen oder verzweigten Alkylrest mit 1 bis 10 Kohlenstoffatomen darstellen, w eine ganze Zahl von 1 bis 3 ist, x eine ganze Zahl von 0 bis 3 ist, y eine ganze Zahl von 0 bis 3 ist, unter der Bedingung dass $x + y \geq 1$, k eine ganze Zahl von 0 bis 6 ist, 1 eine ganze Zahl von 0 bis 6 ist, r eine ganze Zahl von 0 bis 6 ist, s eine ganze Zahl von 0 bis 6 ist, z eine ganze Zahl von 0 bis 3 ist und t eine ganze Zahl von 0 bis 3 ist.

**15.** Zusammensetzung nach Anspruch 14, **dadurch gekennzeichnet, dass** das Monomer (III) ausgewählt wird aus den Monomeren der Formel:

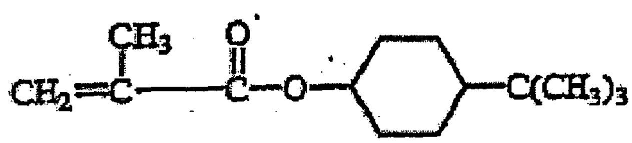

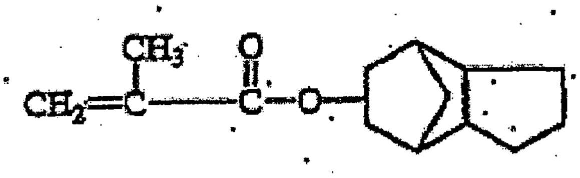

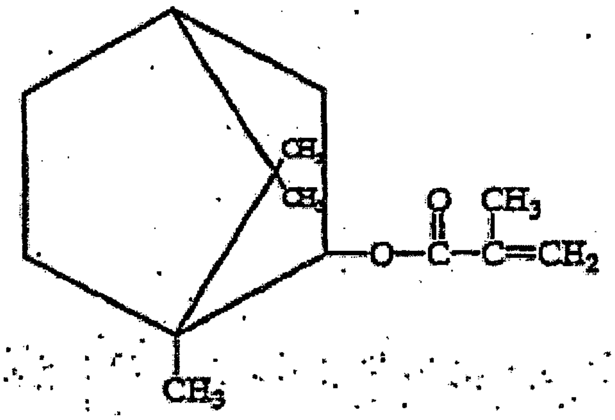

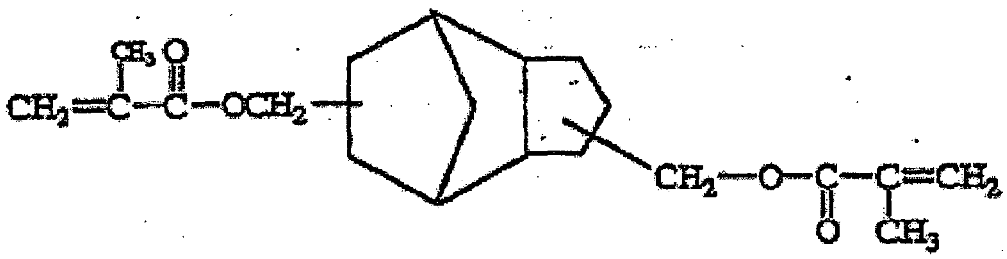

**16.** Zusammensetzung nach einem der vorhergehenden Ansprüche, **dadurch gekennzeichnet, dass** sie 10 bis 30 Gewichtsteile von Monomer (III) umfasst.

**17.** Zusammensetzung nach einem der vorhergehenden Ansprüche, **dadurch gekennzeichnet, dass** die Monomere (II) und (III) jeweils durch Homopolymerisierung zu einem Homopolymer mit einem Brechungsindex von kleiner als oder gleich 1,54 führen.

**18.** Zusammensetzung nach einem der vorhergehenden Ansprüche, **dadurch gekennzeichnet, dass** sie ein oder mehrere Monomere (IV) enthält, die auf radikalischem Wege polymerisierbar sind und sich von den Monomeren (I), (II) und (III) unterscheiden, in einem Anteil von 0 bis 40 Gew.-% bezogen auf das Gesamtgewicht der Monomere (I), (II) und (I-II).

**19.** Zusammensetzung nach einem der vorhergehenden Ansprüche, **dadurch gekennzeichnet, dass** das Monomer (IV) so ist, dass sein Homopolymer einen Brechungsindex von kleiner als oder gleich 1,54 besitzt.

**20.** Zusammensetzung nach einem der vorhergehenden Ansprüche, **dadurch gekennzeichnet, dass** sie eine Viskosität von kleiner oder gleich 0,3 Pa.s besitzt.

**21.** Transparentes Polymersubstrat, aufweisend einen Brechungsindex im Bereich von 1,48 bis 1,52, **dadurch gekennzeichnet, dass** es durch Polymerisierung einer Zusammensetzung nach einem der vorhergehenden Ansprüche erhalten wird.

**22.** Optische Linse, enthaltend ein Polymersubstrat nach Anspruch 21.

23. Optische Linse nach Anspruch 22, **dadurch gekennzeichnet, dass** die Linse eine ophthalmische Linse ist.

24. Optische Linse nach Anspruch 23, **dadurch gekennzeichnet, dass** die Linse ein Brillenglas ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4138538 A
- US 4650845 A
- US 4912185 A
- EP 453149 A
- US 5183870 A
- US 5880171 A
- US 5566027 A